# EUROPEAN PATENT SPECIFICATION

(11) **EP 1 968 814 B1**
(45) Date of publication and mention of the grant of the patent: **11.11.2009**
(21) Application number: 07701649.1
(22) Date of filing: 05.01.2007
(51) Int. Cl.: B60N 2/02, B60N 2/22, B60N 2/30, B60N 2/34

(54) **FOLD FLAT SEAT ASSEMBLY**
ZUSAMMENKLAPPBARE FLACHSITZANORDNUNG
ENSEMBLE SIEGE SE PLIANT A PLAT

(30) Priority: 05.01.2006 US 756410 P
(43) Date of publication of application: 17.09.2008
(73) Proprietor: Intier Automotive Inc., Newmarket, Ontario L3Y 4X7 (CA)
(72) Inventor: HOMIER, Robert I., Plymouth, Michigan 48170 (US); HOLDAMPF, Carl J., Farmington Hills, Michigan 48335 (US)
(74) Representative: Hössle, Markus
(86) International application number: PCT/CA2007/000018
(87) International publication number: WO 2007/076612

(56) References cited:
- EP-A- 0 980 826
- EP-A- 1 464 534
- US-A- 3 282 625
- US-A- 4 131 960
- US-A- 4 268 086
- US-A- 4 268 086
- US-A- 5 454 624
- US-A- 5 528 778
- US-A- 5 741 000
- US-A1- 2005 104 432

## Description

### Field of the Invention

The invention relates to a seat assembly for a motor vehicle. More particularly, the invention relates to a drive link for automatically moving a seat cushion horizontally level with a seat back in response to pivoting the seat back from an upright seating position to a rearwardly folded bed flat position.

### Background Of The Invention

Automotive vehicles include seat assemblies for supporting occupants within the vehicle. Seat assemblies include a generally horizontal seat cushion having an upper seating surface and a generally vertical or upright seat back having a front supporting surface. Typically, a lower end of the seat back is operatively coupled to a rear end of the seat cushion by a recliner mechanism allowing for selective pivotal adjustment of the seat back relative to the seat cushion between a plurality of reclined seating positions.

Oftentimes, the seat back is movable between any of the plurality of reclined seating positions and a forwardly folded stowed position in which the front supporting surface of the seat back is overlying the upper seating surface of the seat cushion. When the seat back is in the forwardly folded stowed position a back surface of the seat back defines a cargo load floor surface.

Additionally, the seat back may be movable between any of the plurality of reclined seating positions and a rearwardly folded bed flat position in which the front supporting surface of the seat back is generally horizontal. In the rearwardly folded bed flat position, the upper seating surface of the seat cushion and the front supporting surface of the seat back define a bed surface.
US Patent US-A- 4,268,086 (corresponding to the preamble of independent claim 8 or, with the exception of the provision of a track assembly for the seat, to the preamble of independent claim 1) discloses a seat assembly mechanism for inclining a seat back to desired positions including a horizontal position to form a bed and also folded forwardly to provide room for cargo and packages. The disclosed seat assembly also has a mechanism for placing the seat back and a seat in an upright position after the seat back has been folded over the seat.

As currently practiced in the seating art, however, the recliner mechanism operatively coupled between the lower end of the seat back and the rear end of the seat cushion results in a step condition between the seat back and seat cushion when the seat back is in the rearwardly folded bed flat position. In other words, when the seat back is moved into the rearwardly folded bed flat position, the lower end of the seat back is disposed higher than or upward of the rear end of the seat cushion resulting in an offset or step condition between the seat back and seat cushion.

It is therefore desirable to provide a drive link operatively coupled between the seat back and seat cushion to align the upper seating surface of the seat cushion with the front supporting surface of the seat back when the seat back is in the rearwardly folded bed flat position. It is also desirable that the drive link move the seat cushion forward and downward when the seat back is in the forwardly folded stowed position.

### Summary Of The Invention

According to the invention as defined in either independent claim 1 or 8, a seat assembly is provided for supporting an occupant above a floor in a motor vehicle. The seat assembly includes a seat cushion having an upper seating surface and a seat back having a front supporting surface. The seat assembly also includes a front link that extends between a first end pivotally coupled to the seat cushion and a second end adapted to be pivotally coupled to the floor. The seat assembly includes a guide link slidably couples the seat cushion for guiding and supporting the seat cushion between a forwardly fold flat position, a seating and a raised position. The seat back is operative for selective pivotal movement relative to said seat cushion between a folded forward position, an upright seating position and a rearwardly folded bed flat position generally horizontal. The seat assembly further includes a drive link that extends between a first end pivotally coupled to the seat back and a second end pivotally coupled to the seat cushion. The drive link automatically moves the seat cushion between the forwardly fold flat position, the seating position and the raised position, wherein the upper seating surface of the seat cushion is aligned horizontally level with the front supporting surface of the seat back, in response to pivotal movement of the seat back between a forwardly fold flat position, an upright seating position and a rearwardly folded bed flat position.
Further features of the invention are disclosed in the dependent claims.

### Brief Description Of The Drawing

Other advantages of the present invention will be readily appreciated as the same becomes better understood by reference to the following detailed description when considered in connection with the accompanying drawings, wherein:

Figure 1 is a side view of a seat assembly in a seating position according to the invention;

Figure 2 is a side view of the seat assembly in a stowed position; and

Figure 3 is a side view of the seat assembly in a bed flat position.

### DETAILED DESCRIPTION OF THE PREFERRED EMBODIMENT

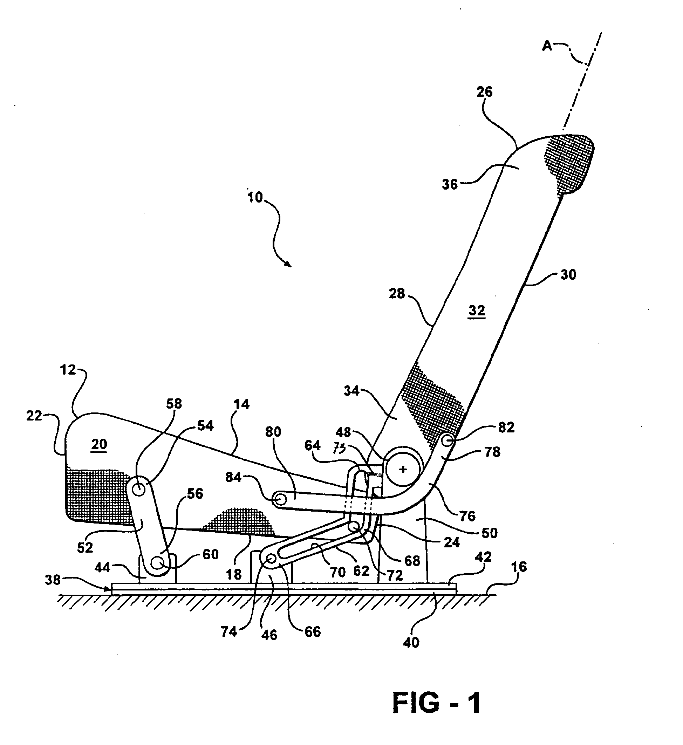

Referring to Figure 1, a seat assembly for an automotive vehicle is generally shown at 10. The seat assembly 10 is shown in a seating position and includes a generally horizontal seat cushion 12. The seat cushion 12 includes an upper seating surface 14 for supporting a seat occupant above a floor 16 of the vehicle, an opposite bottom surface 18, and side surfaces 20 (one shown). The seat cushion 12 extends between a front end 22 and a rear end 24. The seat assembly 10 also includes a generally vertical seat back 26. The seat back 26 includes a front supporting surface 28 for supporting a back of the seat occupant, an opposite back surface 30, and side surfaces 32 (one shown). The seat back 26 extends between a lower end 34 and an upper end 36.

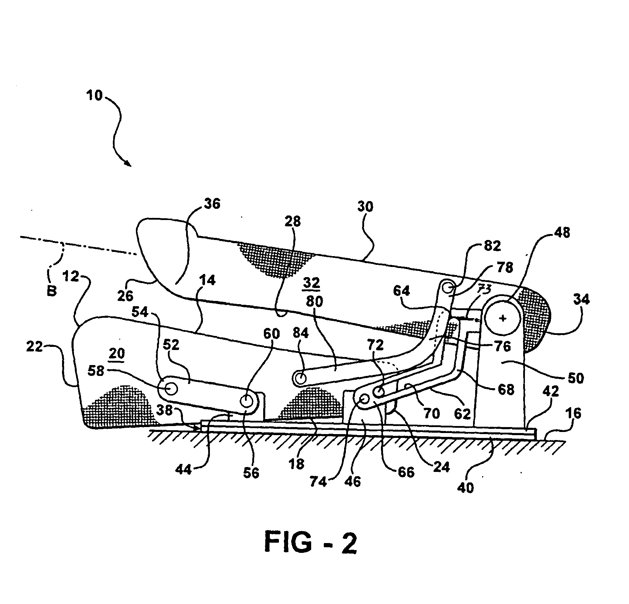

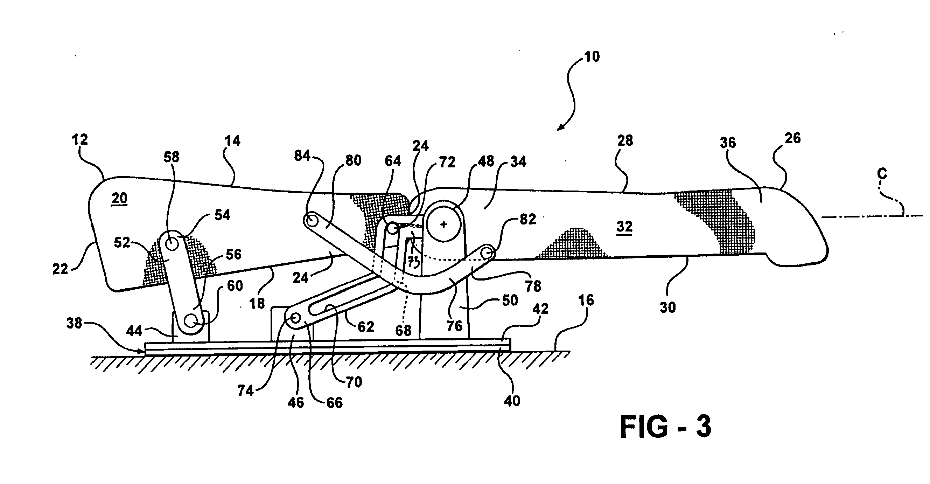

The seat back 26 is operatively coupled to the seat cushion 12 for movement between an upright seating position at A, as shown in Figure 1, a forwardly folded stowed position at B, as shown in Figure 2, and a rearwardly folded bed flat position at C, as shown in Figure 3. The seat assembly 10 is movable between a seating position, shown in Figure 1, a stowed position, shown in Figure 2, and a bed flat position, shown in Figure 3. In the seating position, the seat back 26 is in the upright seating position A and the seat cushion 12 is in a seating position spaced above the floor 16. In the stowed position, the seat cushion 12 is in a lowered position, downward and forward of the seating position, lying generally along the floor 16 and the seat back 26 is in the forwardly folded stowed position B such that the front supporting surface 28 of the seat back 26 is overlying the upper seating surface 14 of the seat cushion 12. Finally, in the bed flat position, the seat back 26 is in the rearwardly folded bed flat position C and the seat cushion 12 is in a raised position such that the upper seating surface 14 of the seat cushion 12 is generally horizontally aligned with the front supporting surface 28 of the seat back 26.

It will be appreciated that while only one side of the seat assembly 10 is shown in the Figures, both an inboard side and an outboard side are substantially the same. In the embodiment shown, a track assembly, generally indicated at 38, is provided for adjusting the seat assembly 10 fore and aft within the vehicle. The track assembly 38 includes a lower fixed track 40 that is adapted to be mounted to the vehicle floor 16 and an upper movable track 42 that is selectively slidable with respect to the fixed track 40. The track assembly 38 is well known in the art and includes assemblies such as disclosed in United States Patent 5,741,000 to Goodbred. A front riser 44 and a rear riser 46 are spaced apart and fixedly mounted to the upper movable track 42 for mounting the seat assembly 10 to the track assembly 38.

A recliner mechanism 48 is disposed between the lower end 34 of the seat back 26 and a seat back bracket 50 for providing selective angular adjustment of the seat back 26 relative to the seat cushion 12. The seat back bracket 50 is fixedly mounted to the upper movable track 42. The recliner mechanism 48 allows the seat back 26 to be adjusted between a plurality of reclined seating positions, one of which is the upright seating position A shown in Figure 1. In addition, the recliner mechanism 48 allows the seat back 26 to be adjusted between any of the plurality of reclined seating positions, the forwardly folded stowed position B, and the rearwardly folded bed flat position C. The recliner mechanism 48 is actuated between a locked condition and an unlocked condition by a release lever (not shown). In the locked condition, the recliner mechanism 48 maintains the seat back 26 in one of the plurality of reclined seating positions. In the unlocked condition, the seat back 26 may be freely adjusted between any of the plurality of reclined seating positions and the forwardly folded stowed position B or the rearwardly folded bed flat position C.

A front link 52 is disposed adjacent to the side surface 20 of the seat cushion 12. The front link 52 extends linearly between a first end 54 wand a second end 56. The first end 54 is pivotally coupled to the side surface 20 of the seat cushion 12, at the front end 22, by pivot pin 58. The second end 56 is pivotally coupled to the front riser 44 by pivot pin 60.

A guide link 62 is disposed adjacent to the side surface 20 of the seat cushion 12. In the embodiment shown, the guide link 62 is generally L-shaped and extends between a first end 64 and a second end 66. An elbow 68 is disposed between the first 64 and second 66 ends. The guide link 62 includes a slot 70 extending along the length of the guide link 62 between the first 64 and second 66 ends. A slide pin 72 is fixedly secured to the side surface 20 of the seat cushion 12, at the rear end 24. The slide pin 72 extends laterally from the side surface 20 and is disposed in the slot 70 slidingly coupling the guide link 62 to the seat cushion 12 for guiding and supporting the seat cushion 12 between the seating, lowered, and raised positions. The first end 64 of the guide link 62 is coupled to the seat back bracket 50 by tab 73. The second end 66 is coupled to the rear riser 46 by fixed pin 74. When the seat assembly 10 is in the seating position, the slide pin 72 is disposed in the slot 70 at the elbow 68 of the guide link 62. When the seat assembly 10 is in the stowed position, the slide pin 72 is disposed in the slot 70 at the second end 66 of the guide link 62. When the seat assembly 10 is in the bed flat position, the slide pin 72 is disposed in the slot 70 at the first end 64 of the guide link 62. Although not shown, it will be appreciated that the guide link 62 may include a latch for engaging and securing the slide pin 72 in the slot 70 at the elbow 68, second end 66, and first end 64 depending on the respective position of the seat assembly 10.

A drive link 76 is disposed adjacent to and outboard of the guide link 62. The drive link 76 extends between a first end 78 and a second end 80. In the embodiment shown, the drive link 76 has a curvature or bend between the first end 78 and the second end 80. The first end 78 is pivotally coupled to the side surface 32 of the seat back 26, adjacent the lower end 34, by pivot pin 82. The second end 80 is pivotally coupled to the side surface 20 of the seat cushion 12, adjacent the rear end 24, by pivot pin 84.

In operation, starting with the seat assembly 10 in the seating position, as shown in Figure 1, the release handle is actuated to unlock the recliner mechanism 48. The seat back 26 is then pivoted forward toward the forwardly folded stowed position B. The forward pivotal movement of the seat back 26 urges the first end 78 of the drive link 76 forward and the second end 80 of the drive link 76 downward and forward. In response, the seat cushion 12 moves downward and forward. At the same time, the second end 56 of the front link 52 pivots about pivot pin 60 in a counterclockwise direction (when viewed from Figure 1) and the slot 70 in the guide link 62 guides the slide pin 72 from the elbow 68 to the second end 66 such that the seat cushion 12 moves from the seating position to the lowered position. When the front supporting surface 28 of the seat back 26 abuts the upper seating surface 14 of the seat cushion 12 the seat assembly 10 is in the stowed position, as shown in Figure 2. In the stowed position, the back surface 30 of the seat back 26 is disposed generally horizontal to the floor 16 defining a cargo load floor surface.

Starting again with the seat assembly 10 in the seating position, the release handle is actuated to unlock the recliner mechanism 48. The seat back 26 may also be pivoted rearward toward the rearwardly folded bed flat position C. The rearward pivotal movement of the seat back 26 urges the first end 78 of the drive link 76 downward and rearward and the second end 80 of the drive link 76 upward. In response, the rear end 24 of the seat cushion 12 moves upward and the slot 70 in the guide link 62 guides the slide pin 72 from the elbow 68 to the first end 64 such that the seat cushion 12 moves from the seating position to the raised position. When the upper seating surface 14 of the seat cushion 12 is horizontally aligned with the front supporting surface 28 of the seat back 26, the seat assembly 10 is in the bed flat position, as shown in Figure 3. In the bed flat position, the upper seating surface 14 of the seat cushion 12 and the front supporting surface 28 of the seat back 26 are disposed horizontally relative to the floor 16.

The invention has been described here in an illustrative manner, and it is to be understood that the terminology used is intended to be in the nature of words of description rather than limitation. It is, therefore, to be understood that within the scope of the appended claims, the invention may be practiced other than as specifically described.

## Claims

1. A seat assembly for supporting an occupant above a floor (16) in a motor vehicle, said seat assembly (10) comprising:
a seat track assembly (38) configured for mounting on said vehicle floor (16);
a seat back (26) including a front supporting surface (28), said seat back (26) operatively coupled to said seat track assembly (38) for selective pivotal movement between an upright seating position and a rearwardly folded bed flat position generally parallel to the floor (16), said seat back (26) being selectively movable between said upright seating position and a forwardly folded stowed position overlying said seat cushion (12);
a seat cushion (12) including an upper seating surface (14);
a front link (52) pivotally coupling a front end (22) of said seat cushion (12) to the seat track assembly (38);
a guide link (62) slidably coupling a rear end (24) of said seat cushion (12) to said seat track assembly (38), said guide link (62) guiding movement of said seat cushion (12) between a seating position and a raised position; and
a drive link (76) operatively coupling said seat back (26) to said seat cushion (12) for automatically moving said seat cushion (12) between said seating position and said raised position, wherein said upper seating surface (14) of said seat cushion (12) is aligned with said front supporting surface (28) of said seat back (26), in response to pivotal movement of said seat back (26) between said upright seating position and said rearwardly folded bed flat position, **characterized in that** said drive link (76) automatically moves said seat cushion (12) between said seating position and a lowered position downward and forward of said seating position in response to pivotal movement of said seat back (26) from said upright seating position to said forwardly folded stowed position, and said guide link (62) guides said seat cushion (12) between said seating and lowered positions.

2. A seat assembly as set forth in claim 1 including a seat back bracket (50) adapted to be fixedly secured to the seat track assembly (38).

3. A seat assembly as set forth in claim 2 wherein said guide link (62) has a generally L- shaped slot (70) including an elbow (68), and said seat cushion (12) has a pin (72) slidably engaging within said slot (70) for travel between a first end (64) and a second end (66) of said slot (70), and said guide link (62) is fixedly secured to said seat back bracket (50).

4. A seat assembly as set forth in claim 3 including a recliner mechanism (48) disposed between a lower end (34) of said seat back (26) and said seat back bracket (50) providing selective pivotal adjustment of said seat back (26) between said upright seating position, a plurality of reclined seating positions, said forwardly folded stowed position, and said rearwardly folded bed flat position.

5. A seat assembly as set forth in claim 4 wherein a first end (78) of said drive link (76) is pivotally coupled to a lower end (34) of said seat back (26) and a second end (80) of said drive link (76) is pivotally coupled to said rear end (24) of said seat cushion (12).

6. A seat assembly as set forth in claim 5 wherein said slide pin (72) is disposed in said slot (70) at said elbow (68) when said seat back (26) is in said upright seating position, at said first end (64) of said slot (70) when said seat back (26) is in said rearwardly folded bed flat position, and at said second end (66) of said slot (70) when said seat back (26) is in said forwardly folded stowed position.

7. A seat assembly as set forth in claim 6 wherein said track assembly (38) provided selective fore and aft adjustment of said seat assembly (10) within the vehicle.

8. A seat assembly for supporting an occupant above a floor (16) in a motor vehicle, said seat assembly (10) comprising:
a seat back (26) including a front supporting surface (28), said seat back (26) operatively coupled to said floor (16) for selective pivotal movement between an upright seating position and a rearwardly folded bed flat position generally parallel to the floor (16), said seat back (26) being selectively movable between said upright seating position and a forwardly folded stowed position overlying said seat cushion (12);
a seat cushion (12) including an upper seating surface (14);
a front link (52) pivotally coupling a front end (22) of said seat cushion (12) to the floor (16);
a guide link (62) slidably coupling a rear end of said seat cushion (12) to said floor (16), said guide-link (62) guiding movement of said seat cushion (12) between a seating position and a raised position; and
a drive link (76) operatively coupling said seat back (26) to said seat cushion (12) for automatically moving said seat cushion (12) between said seating position and said raised position, wherein said upper seating surface (14) of said seat cushion (12) is aligned with said front supporting surface (28) of said seat back (26), in response to pivotal movement of said seat back (26) between said upright seating position and said rearwardly folded bed flat position, **characterized in that** said drive link (76) automatically moves said seat cushion (12) between said seating position and a lowered position downward and forward of said seating position in response to pivotal movement of said seat back (26) from said upright seating position to said forwardly folded stowed position, and said guide link (62) guides said seat cushion (12) between said seating and lowered positions.

9. A seat assembly as set forth in claim 8 including a seat back bracket (50) adapted to be fixedly secured to the floor (16), said seat back bracket (50) pivotally engaging said seat back (26).

10. A seat assembly as set forth in claim 9 wherein said guide link (62) has a generally L- shaped slot (70) including an elbow (68) and said seat cushion (12) has a pin (72) slidably engaging within said slot (70) for travel between a first end (64) and a second end (66) of said slot (70), and said guide link (62) is fixedly secured to said seat back bracket (50).

11. A seat assembly as set forth in claim 10 including a recliner mechanism (48) disposed between a lower end (34) of said seat back (26) and said seat back bracket (50), said recliner mechanism (48) providing selective pivotal adjustment of said seat back (26) between said upright seating position, a plurality of reclined seating positions, said forwardly folded stowed position, and said rearwardly folded bed flat position.

12. A seat assembly as set forth in claim 11 wherein a first end (78) of said drive link (76) is pivotally coupled to said lower end (34) of said seat back (26) and a second end (80) of said drive link (76) is pivotally coupled to said rear end (24) of said seat cushion (12).

13. A seat assembly as set forth in claim 12 wherein said slide pin (72) is disposed at said slot (70) at said elbow (68) when said seat back (26) is in said upright seating position, at said first end (64) of said slot (70) when said seat back (26) is in said rearwardly folded bed flat position, and at said second end (66) of said slot (70) when said seat back (26) is in said forwardly folded stowed position.

## Patentansprüche

1. Sitzanordnung zum Stützen eines Fahrzeuginsassen über einem Boden (16) in einem Kraftfahrzeug mit:
einer zum Befestigen an dem Kraftfahrzeugboden (16) ausgebildeten Sitzschienenanordnung (38),
einer Sitzlehne (26) mit einer vorderen Stützoberfläche (28), wobei die Sitzlehne (26) wirkend mit der Sitzschienenanordnung (38) zur wahlweisen Schwenkbewegung zwischen einer aufrechten Sitzposition und einer nach hinten geklappten bzw. abgelegten flachen Bettposition gekoppelt ist, die im wesentlichen parallel zu dem Boden (16) ausgerichtet ist, wobei die Sitzlehne (26) wahlweise zwischen der aufrechten Sitzposition und einer nach vorn geklappten bzw. abgelegten, über dem Sitzpolster (12) liegenden Verstauposition bewegbar ist,
einem Sitzpolster (12) mit einer oberen Sitzoberfläche (14),
einem vorderen Verbindungsstück (52), das schwenkbar ein vorderes Ende (22) des Sitzpolsters (12) mit der Sitzschienenanordnung (38) koppelt,
einem Führungsverbindungsstück (62), das verschiebbar ein hinteres Ende (24) des Sitzpolsters (12) mit der Sitzschienenanordnung (38) koppelt, wobei das Führungsverbindungsstück (62) eine Bewegung des Sitzpolsters (12) zwischen einer Sitzposition und einer angehobenen Position führt, und
einem Antriebsverbindungsstück (76), das wirkend die Sitzlehne (26) mit dem Sitzpolster (12) zum automatischen Bewegen des Sitzpolsters (12) zwischen der Sitzposition und der angehobenen Position koppelt, wobei die obere Sitzoberfläche (14) des Sitzpolsters (12) mit der vorderen Stützoberfläche (28) der Sitzlehne (26) fluchtend ausgerichtet ist, in Reaktion auf eine Schwenkbewegung der Sitzlehne (26) zwischen der aufrechten Sitzposition und der nach hinten geklappten flachen Bettposition, **dadurch gekennzeichnet, dass** das Antriebsverbindungsstück (76) das Sitzpolster (12) automatisch zwischen der Sitzposition und einer abgesenkten Position nach unten und nach vorn bezüglich der Sitzposition in Reaktion auf eine Schwenkbewegung der Sitzlehne (26) aus der aufrechten Sitzposition in die nach vorn geklappte Verstauposition bewegt, und das Führungsverbindungsstück (62) das Sitzpolster (12) zwischen der Sitz- und der abgesenkten Position führt.

2. Sitzanordnung nach Anspruch 1 mit einem Sitzlehnenbeschlag (50), der dazu ausgebildet ist, starr an der Sitzschienenanordnung (38) befestigt zu werden.

3. Sitzanordnung nach Anspruch 2, wobei das Führungsverbindungsstück (62) einen im wesentlichen L-förmigen Schlitz (70) mit einer Biegung bzw. Abwinklung (68) umfasst und das Sitzpolster (12) einen gleitend in den Schlitz (70) eingreifenden Stift (72) zum Bewegen zwischen einem ersten Ende (64) und einem zweiten Ende (66) des Schlitzes (70) umfasst und das Führungsverbindungsstück (62) starr an dem Sitzlehnenbeschlag (50) befestigt ist.

4. Sitzanordnung nach Anspruch 3 mit einem zwischen einem unteren Ende (34) der Sitzlehne (26) und dem Sitzlehnenbeschlag (50) angeordneten Legemechanismus (48), der ein wahlweises Schwenkeinstellen der Sitzlehne (26) zwischen der aufrechten Sitzposition, einer Mehrzahl von zurückgelegten bzw. zurückgelehnten Sitzpositionen, der nach vorn geklappten Verstauposition und der nach hinten geklappten flachen Bettposition bereitstellt.

5. Sitzanordnung nach Anspruch 4, wobei ein erstes Ende (78) des Antriebsverbindungsstücks (76) schwenkbar mit einem unteren Ende (34) der Sitzlehne (26) und ein zweites Ende (80) des Antriebsverbindungsstücks (76) schwenkbar mit dem hinteren Ende (24) des Sitzpolsters (12) gekoppelt ist.

6. Sitzanordnung nach Anspruch 5, wobei der Gleitstift (72) in dem Schlitz (70) an der Biegung (68) angeordnet ist, wenn sich die Sitzlehne (26) in der aufrechten Sitzposition befindet, an dem ersten Ende (64) des Schlitzes (70) angeordnet ist, wenn sich die Sitzlehne (26) in der nach hinten geklappten flachen Bettposition befindet, und an dem zweiten Ende (66) des Schlitzes (70) angeordnet ist, wenn sich die Sitzlehne (26) in der nach vorn geklappten Verstauposition befindet.

7. Sitzanordnung nach Anspruch 6, wobei die Schienenanordnung (38) ein wahlweises Vorwärts- und Rückwärts-Einstellen der Sitzanordnung (10) in in dem Kraftfahrzeug ermöglicht.

8. Sitzanordnung zum Stützen eines Fahrzeuginsassen über einem Boden (16) in einem Kraftfahrzeug mit:
einer Sitzlehne (26) mit einer vorderen Stützoberfläche (28), wobei die Sitzlehne (26) wirkend mit dem Boden (16) zur wahlweisen Schwenkbewegung zwischen einer aufrechten Sitzposition und einer nach hinten geklappten bzw. abgelegten flachen Bettposition gekoppelt ist, die im wesentlichen parallel zu dem Boden (16) ausgerichtet ist, wobei die Sitzlehne (26) wahlweise zwischen der aufrechten Sitzposition und einer nach vorn geklappten bzw. abgelegten, über dem Sitzpolster (12) liegenden Verstauposition bewegbar ist,
einem Sitzpolster (12) mit einer oberen Sitzoberfläche (14),
einem vorderen Verbindungsstück (52), das schwenkbar ein vorderes Ende (22) des Sitzpolsters (12) mit dem Boden (16) koppelt,
einem Führungsverbindungsstück (62), das verschiebbar ein hinteres Ende des Sitzpolsters (12) mit dem Boden (16) koppelt, wobei das Führungsverbindungsstück (62) eine Bewegung des Sitzpolsters (12) zwischen einer Sitzposition und einer angehobenen Position führt, und
einem Antriebsverbindungsstück (76), das wirkend die Sitzlehne (26) mit dem Sitzpolster (12) zum automatischen Bewegen des Sitzpolsters (12) zwischen der Sitzposition und der angehobenen Position koppelt, wobei die obere Sitzoberfläche (14) des Sitzpolsters (12) mit der vorderen Stützoberfläche (28) der Sitzlehne (26) fluchtend ausgerichtet ist, in Reaktion auf eine Schwenkbewegung der Sitzlehne (26) zwischen der aufrechten Sitzposition und der nach hinten geklappten flachen Bettposition, **dadurch gekennzeichnet, dass** das Antriebsverbindungsstück (76) das Sitzpolster (12) automatisch zwischen der Sitzposition und einer abgesenkten Position nach unten und nach vorn bezüglich der Sitzposition in Reaktion auf eine Schwenkbewegung der Sitzlehne (26) aus der aufrechten Sitzposition in die nach vorn geklappte Verstauposition bewegt, und das Führungsverbindungsstück (62) das Sitzpolster (12) zwischen der Sitz- und der abgesenkten Position führt.

9. Sitzanordnung nach Anspruch 8 mit einem Sitzlehnenbeschlag (50), der dazu ausgebildet ist, starr an dem Boden (16) befestigt zu werden, wobei der Sitzlehnenbeschlag (50) schwenkbar die Sitzlehne (26) beaufschlagt.

10. Sitzanordnung nach Anspruch 9, wobei das Führungsverbindungsstück (62) einen im wesentlichen L-förmigen Schlitz (70) mit einer Biegung bzw. Abwinklung (68) umfasst und das Sitzpolster (12) einen gleitend in den Schlitz (70) eingreifenden Stift (72) zum Bewegen zwischen einem ersten Ende (64) und einem zweiten Ende (66) des Schlitzes (70) umfasst und das Führungsverbindungsstück (62) starr an dem Sitzlehnenbeschlag (50) befestigt ist.

11. Sitzanordnung nach Anspruch 10 mit einem zwischen einem unteren Ende (34) der Sitzlehne (26) und dem Sitzlehnenbeschlag (50) angeordneten Legemechanismus (48), wobei der Legemechanismus (48) ein wahlweises Schwenkeinstellen der Sitzlehne (26) zwischen der aufrechten Sitzposition, einer Mehrzahl von zurückgelegten bzw. zurückgelehnten Sitzpositionen, der nach vorn geklappten Verstauposition und der nach hinten geklappten flachen Bettposition bereitstellt.

12. Sitzanordnung nach Anspruch 11, wobei ein erstes Ende (78) des Antriebsverbindungsstücks (76) schwenkbar mit dem unteren Ende (34) der Sitzlehne (26) und ein zweites Ende (80) des Antriebsverbindungsstücks (76) schwenkbar mit dem hinteren Ende (24) des Sitzpolsters (12) gekoppelt ist.

13. Sitzanordnung nach Anspruch 12, wobei der Gleitstift (72) an dem Schlitz (70) an der Biegung (68) angeordnet ist, wenn sich die Sitzlehne (26) in der aufrechten Sitzposition befindet, an dem ersten Ende (64) des Schlitzes (70) angeordnet ist, wenn sich die Sitzlehne (26) in der nach hinten geklappten flachen Bettposition befindet, und an dem zweiten Ende (66) des Schlitzes (70) angeordnet ist, wenn sich die Sitzlehne (26) in der nach vorn geklappten Verstauposition befindet.

## Revendications

1. Ensemble formant siège pour supporter un occupant au-dessus d'un plancher (16) dans un véhicule à moteur, ledit ensemble formant siège (10) comprenant :
un ensemble formant voie de siège (38) configuré pour être monté sur ledit plancher (16) du véhicule ;
un dossier de siège (26) qui inclut une surface de support frontale (28), ledit dossier de siège (26) étant fonctionnellement couplé audit ensemble formant voie de siège (38) pour un mouvement de pivotement sélectif entre une position assise dressée et une position repliée à plat vers l'arrière à la manière d'un lit, généralement parallèle au plancher (16), ledit dossier de siège (26) étant sélectivement mobile entre ladite position assise dressée et une position escamotée, repliée vers l'avant, qui surplombe ledit coussin de siège (12) ;
un coussin de siège (12) qui inclut une surface d'assise supérieure (14) ;
un bras avant (52) qui couple en pivotement une extrémité avant (22) dudit coussin de siège (12) audit ensemble formant voie de siège (38) ;
un bras de guidage (62) qui couple en coulissement une extrémité arrière (24) dudit coussin de siège (12) audit ensemble formant voie de siège (38), ledit bras de guidage (62) guidant un mouvement dudit coussin de siège (12) entre une position assise et une position relevée ; et
un bras d'entraînement (76) qui couple fonctionnellement ledit dossier de siège (26) audit coussin de siège (12) pour déplacer automatiquement ledit coussin de siège (12) entre ladite position assise et ladite position relevée, de sorte que ladite surface d'assise supérieure (14) dudit coussin de siège (12) est alignée avec ladite surface de support frontale (28) dudit dossier de siège (26) en réponse à un mouvement de pivotement dudit dossier de siège (26) entre ladite position assise dressée et ladite position repliée à plat vers l'arrière à la manière d'un lit,
**caractérisé en ce que** ledit bras d'entraînement (76) déplace automatiquement ledit coussin de siège (12) entre ladite position assise et une position abaissée vers le bas et vers l'avant de ladite position assise en réponse au mouvement de pivotement dudit dossier de siège (26) depuis ladite position assise dressée vers ladite position escamotée repliée vers l'avant, et ledit bras de guidage (62) guide ledit coussin de siège (12) entre ladite position assise et ladite position abaissée.

2. Ensemble formant siège selon la revendication 1, incluant une platine (50) de dossier adaptée à être attachée de manière fixe sur l'ensemble formant voie de siège (38).

3. Ensemble formant siège selon la revendication 2, dans lequel ledit bras de guidage (62) présente une fente généralement en forme de L (70) qui inclut un coude (68), et ledit coussin de siège (12) comprend une tige (72) engagée en coulissement dans ladite fente (70) pour se déplacer entre une première extrémité (64) et une seconde extrémité (66) de ladite fente (70), et ledit bras de guidage (62) est attaché de manière fixe à ladite platine (50) de dossier.

4. Ensemble formant siège selon la revendication 3, incluant un mécanisme d'inclinaison (48) disposé entre une extrémité inférieure (34) dudit dossier de siège (26) et ladite platine (50) de dossier et permettant un ajustement de pivotement sélectif dudit dossier (26) entre ladite position assise dressée, une pluralité de positions assises inclinées, ladite position escamotée repliée vers l'avant, et ladite position repliée à plat vers l'arrière à la manière d'un lit.

5. Ensemble formant siège selon la revendication 4, dans lequel une première extrémité (78) dudit bras d'entraînement (76) est couplée en pivotement à une extrémité inférieure (34) dudit dossier de siège (26), et une seconde extrémité (80) dudit bras d'entraînement (76) est couplée en pivotement à ladite extrémité arrière (24) dudit coussin de siège (12).

6. Ensemble formant siège selon la revendication 5, dans lequel ladite tige coulissante (70) est disposée dans ladite fente (70) au niveau dudit coude (68) quand ledit dossier de siège (26) est dans ladite position assise dressée, à ladite première extrémité (64) de ladite fente (70) quand ledit dossier de siège (26) est dans ladite position repliée à plat vers l'arrière à la manière d'un lit, et à ladite seconde extrémité (66) de ladite fente (70) quand ledit dossier de siège (26) est dans ladite position escamotée repliée vers l'avant.

7. Ensemble formant siège selon la revendication 6, dans lequel ledit ensemble formant voie (38) permet un ajustement sélectif avant/arrière dudit ensemble formant siège (10) dans le véhicule.

8. Ensemble formant siège pour supporter un occupant au-dessus d'un plancher (16) dans un véhicule à moteur, ledit ensemble formant siège (10) comprenant :
un dossier de siège (26) qui inclut une surface de support frontale (28), ledit dossier de siège (26) étant fonctionnellement couplé audit plancher (16) pour un mouvement de pivotement sélectif entre une position assise dressée et une position repliée à plat vers l'arrière à la manière d'un lit, généralement parallèle au plancher (16), ledit dossier de siège (26) étant sélectivement mobile entre ladite position assise dressée et une position escamotée repliée vers l'avant qui surplombe ledit coussin de siège (12) ;
un coussin de siège (12) qui inclut une surface d'assise supérieure (14) ;
un bras avant (52) qui couple en pivotement une extrémité avant (22) dudit coussin de siège (12) au plancher (16) ;
un bras de guidage (62) qui couple en coulissement une extrémité arrière dudit coussin de siège (12) audit plancher (16), ledit bras de guidage (62) guidant un mouvement dudit coussin de siège (12) entre une position assise et une position relevée ; et
un bras d'entraînement (76) qui couple fonctionnellement ledit dossier (26) audit coussin de siège (12) pour déplacer automatiquement ledit coussin de siège (12) entre ladite position assise et ladite position relevée, dans lequel ladite surface d'assise supérieure (14) dudit coussin de siège (12) est alignée avec ladite surface de support frontale (28) dudit dossier de siège (26) en réponse à un mouvement de pivotement dudit dossier de siège (26) entre ladite position assise dressée et ladite position repliée à plat vers l'arrière à la manière d'un lit,
**caractérisé en ce que**
ledit bras d'entraînement (76) déplace automatiquement ledit coussin de siège (12) entre ladite position assise et une position abaissée vers le bas et vers l'avant de ladite position assise en réponse à un mouvement de pivotement dudit dossier de siège (26) depuis ladite position assise dressée vers ladite position escamotée repliée vers l'avant, et ledit bras de guidage (62) guide ledit coussin de siège (12) entre ladite position assise et ladite position abaissée.

9. Ensemble formant siège selon la revendication 8, incluant une platine de dossier (50) adaptée à être attachée de manière fixe sur le plancher (16), ladite platine de dossier (50) engageant en pivotement ledit dossier de siège (26).

10. Ensemble formant siège selon la revendication 9, dans lequel ledit bras de guidage (62) présente une fente (70) généralement en forme de L qui inclut un coude (68), et ledit coussin de siège (12) comprend une tige (72) engagée en coulissement dans ladite fente (70) pour se déplacer entre une première extrémité (64) et une seconde extrémité (66) de ladite fente (70), et ledit bras de guidage (62) est attaché de manière fixe à ladite platine de dossier (50).

11. Ensemble formant siège selon la revendication 10, incluant un mécanisme d'inclinaison (48) disposé entre une extrémité inférieure (34) dudit dossier de siège (26) et ladite platine de dossier (50), ledit mécanisme d'inclinaison (48) permettant un ajustement de pivotement sélectif dudit dossier de siège (26) entre ladite position assise dressée, une pluralité de positions assises inclinées, ladite position escamotée repliée vers l'avant, et ladite position repliée à plat vers l'arrière à la manière d'un lit.

12. Ensemble formant siège selon la revendication 11, dans lequel une première extrémité (78) dudit bras d'entraînement (76) est couplée en pivotement à ladite extrémité inférieure (34) dudit dossier de siège (26) et une seconde extrémité (80) dudit bras d'entraînement (76) est couplée en pivotement à ladite extrémité arrière (24) dudit coussin de siège (12).

13. Ensemble formant siège selon la revendication 12, dans lequel ladite tige coulissante (72) est disposée dans ladite fente (70) au niveau dudit coude (68) quand ledit dossier de siège (26) est dans ladite position assise dressée, à ladite première extrémité (64) de ladite fente (70) quand ledit dossier de siège (26) est dans ladite position repliée à plat vers l'arrière à la manière d'un lit, et à ladite seconde extrémité (66) de ladite fente (70) quand ledit dossier de siège (26) est dans ladite position escamotée repliée vers l'avant.
